# EUROPEAN PATENT APPLICATION

(11) **EP 3 989 592 A1**
(43) Date of publication of application: **27.04.2022**
(21) Application number: 20878863.8
(22) Date of filing: 23.10.2020
(51) Int. Cl.: H04N 21/6405, H04N 21/6408, H04N 21/845, H04N 21/231, H04N 21/64

(54) **LIVE MEDIA STREAM RECORDING METHOD AND SYSTEM, AND COMPUTER-READABLE STORAGE MEDIUM**

(30) Priority: 24.10.2019 CN 201911019909
(71) Applicant: ZTE Corporation, shenzhen Guangdong 518057 (CN)
(72) Inventor: WANG, Fang, Shenzhen, Guangdong 518057 (CN)
(74) Representative: Betten & Resch
(86) International application number: PCT/CN2020/123370
(87) International publication number: WO 2021/078279

(57) **Abstract**

A live media stream recording method and system, and a computer-readable storage medium. A recording device receives a multicast stream transmitted by a transcoding device, and the multicast stream comprises a media stream aggregating storage information and a data stream comprising slice information (S101); the recording device obtains the aggregated storage information and the slice information (S102); the recording device performs processing on the media stream according to the aggregated storage information to generate an aggregation slice, and according to the slice information, generates corresponding slice index information (S103).

## Description

### CROSS-REFERENCE TO RELATED APPLICATION

This application is filed on the basis of the Chinese patent application No. 201911019909.0 filed October 24, 2019, and claims priority of the Chinese patent application, the entire contents of which are incorporated herein by reference.

### TECHNICAL FIELD

The embodiments of the present invention relate to, but are not limited to the technical field of streaming media, and in particular relate to, but are not limited to a method and a system for recording a live broadcast media stream, and computer-readable storage medium.

### BACKGROUND

Streaming media technology has been intensively used with the popularization of broadband networks and the development of multimedia technology. For example, the booming IPTV service in recent years has achieved substantial and stable development in terms of geographical coverage, the scale of users, and the richness of content. In particular, Transport Stream over Real-time Transport Protocol (TS over RTP or Transport Stream over User Datagram Protocol (TS over UDP) are widely used in IPTV live broadcast services, and contents are distributed through the multicast of the IP network, which has the advantages of reduction in network bandwidth and small live broadcast delay. However, for the exact reason above, IPTV applications also have higher requirements for transmission networks, such as supporting for multicast, a private network, low transmission delay and high reliability, or the like, and a set-top box for accessing the network and playing. And, in a time-shifting playback or replay service for IPTV, a Content Delivery Network (CDN) node may record the IPTV multicast streams and provide them later. Generally, a multicast stream is successively segmented into segments with a duration (for example, 30 minutes) and saved according to the online generation of IPTV live broadcast content, and these segments are successive one after another. And a segment having a duration that exceeds the maximum recording duration will be rolled back periodically.

With the development of Over the Top (OTT) technology, especially smart terminal devices, more and more users watch online videos through their smart terminal devices. However, for smart terminals, especially smart mobile terminals, the quality of the network they access, is quite different from that of the IPTV private network, for example, transmission delay is relatively higher and reliability is relatively lower. Therefore, the HLS protocol is generally used for online videos presented on smart terminal devices.

In some cases where several recording nodes are presented, the HLS segments recorded at various recording peers may not be completely consistent in terms of file size, serial number, time, duration, data content, or the like, due to various reasons, such as the time, the network conditions, and the recording initialization parameters may be different for each recording peer. In addition, IPTV streams would be recorded respectively for IPTV users and OTT users, for a time-shifting playback or replay service, resulting in waste of storage. Furthermore, in a multi-level architecture, an edge node may go back to source to various recording nodes for various segments, under a service request initiated by a user. And thus, the Uniform Resource Identification (URI) of a segment obtained from one recording node may be invalid for a back-to-source request initiated by another recording node, or the segment may not be successive with the previous one, resulting in poor service watching experience.

### SUMMARY

In view of this, in some embodiments of the present invention, a method and a system for recording a live broadcast media stream, and computer-readable storage medium are provided to at least alleviate some related technical problems, including the problem that multi-peer recording and service are not supported, recorded contents of different recording devices are different, and sharing of contents between IPTV and HLS are not supported, resulting in waste of storage.

An embodiment of the present invention provides a live media stream recording method which includes, receiving, by a recording device, a multicast stream comprising a media stream containing aggregated storage information and a data stream containing segmenting information as transmitted by a transcoding device; acquiring, by the recording device, the aggregated storage information, and the segmenting information; and processing the media stream based on the aggregated storage information and generating an aggregated segment, and generating a corresponding segment index information based on the segmenting information, by the recording device.

An embodiment of the present invention further provides a system for recording a live broadcast media stream, comprising a transcoding device and a recording device, wherein, the transcoding device is configured to, parse a media stream, add aggregated storage information into the media stream, perform a preprocessing for segmenting the media stream based on the aggregated storage information and parsing of the media stream, and generate a data stream containing segmenting information; and the recording device is configured to, receive a multicast stream including a media stream containing aggregated storage information and a data stream containing segmenting information as transmitted by a transcoding device, acquire the aggregated storage information and the segmenting information, process the media stream based on the aggregated storage information to generate an aggregated segment, and generate corresponding segment index information based on the segmenting information.

An embodiment of the present invention further provides a computer-readable storage medium storing at least one computer program executable by a processor, which when executed by the processor, causes the processor to carry out the method for recording a live broadcast media stream as mentioned above.

Other features and corresponding beneficial effects of the present invention are described in the latter part of the specification, and it should be understood that at least part of the beneficial effects will become apparent from the description in the specification of the present invention.

### BRIEF DESCRIPTION OF DRAWINGS

FIG. 1 depicts a schematic diagram of a general process of a method for recording a live broadcast media stream according to Embodiment One of the present invention;
FIG. 2 depicts a schematic flowchart of an example of a method for transcoding a live broadcast media stream according to Embodiment One of the present invention;
FIG. 3 depicts a schematic flowchart of a method for recording a live broadcast media stream according to Embodiment Two of the present invention;
FIG. 4 depicts a schematic diagram of an application scenario of a method for recording a live broadcast media stream according to Embodiment Two of the present invention;
FIG. 5 depicts a schematic flowchart of a method for recording a live broadcast media stream according to Embodiment Three of the present invention;
FIG. 6 depicts a schematic diagram of an application scenario of a method for recording a live broadcast media stream according to Embodiment Three of the present invention;
FIG. 7 depicts a schematic flowchart of a method for recording a live broadcast media stream according to Embodiment Four of the present invention;
FIG. 8 depicts a schematic diagram of an application scenario of a method for recording a live broadcast media stream according to Embodiment Four of the present invention;
FIG. 9 depicts a schematic diagram of the components and outputs of the transcoding device in a system for recording a live broadcast media stream according to Embodiment Five of the present invention; and
FIG. 10 depicts a schematic diagram of the components and outputs of the recording device in a system for recording a live broadcast media stream according to Embodiment Five of the present invention.

### DETAILED DESCRIPTION

In order to illustrate the objectives, technical solutions, and advantages of the present invention, further descriptions for some embodiments of the present invention will be provided with details in conjunction with the accompanying drawings. It should be understood that the specific embodiments described herein are illustrative, but not limiting.

It should be noted that the embodiments in this application and the features in the embodiments can be combined with each other without conflict.

### EMBODIMENT ONE

In an embodiment of the present invention, a method for recording a live broadcast media stream is provided to at least alleviate some related technical problems, including the problem that multi-peer recording and service are not supported, recorded contents of different recording devices are different, and sharing of contents between IPTV and HLS are not supported, resulting in waste of storage.

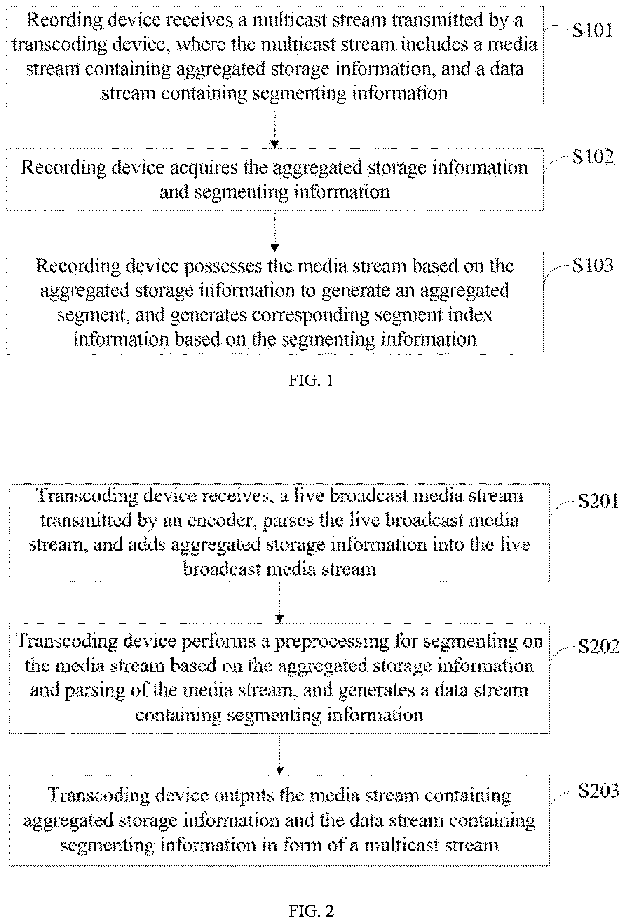

Please refer to FIG. 1, which depicts a schematic diagram of a general process of a method for recording a live media stream according to an embodiment of the present invention. The process will be described in detail as follows.

In S101, a recording device receives a multicast stream transmitted by a transcoding device, where the multicast stream includes a media stream containing aggregated storage information, and a data stream containing segmenting information.

In an embodiment of the present invention, the recording device is a device configured to provide an aggregated segment and segment index for recorded media streams. The recording device may be an individual recording center, or may be arranged in a CDN and co-located with a service node.

It should be understood that the aggregated storage information is used to instruct the recording device how the media streams should be stored, and usually includes the following information, an aggregated segment identifier, an offset position of the first byte of media data contained in a data packet in the aggregated segment, and may further include, a system time corresponding to the data packet, a data packet identifier, and other information required for recording for an IPTV channel.

In an embodiment of the present invention, the segmenting information is HLS segmenting information, which is indicative of a method for segmenting based on the HLS protocol. The HLS segmenting information is used to instruct the recording device on how to perform HLS segmenting on a stored media stream. The HLS segmenting information includes but is not limited to, an identifier of the aggregated segment to which an HLS segment belongs, a sequence number of the segment, and an offset position of the first byte of the segment in an aggregated segment, a length of the segment, duration of the segment, a system time corresponding to the first frame of the segment, an identifier of the segment, or the like.

Before the recording device receives a multicast stream transmitted by a transcoding device, an IPTV live media stream is processed by the transcoding device, and the media stream is transmitted together with the corresponding aggregated storage information and segmenting information by the transcoding device. FIG. 2 depicts the above procedure in detail.

In S201, the transcoding device receives, a live media stream transmitted by an encoder, parses the live broadcast media stream, and adds aggregated storage information into the live broadcast media stream.

In S202, the transcoding device performs a preprocessing for segmenting on the media stream based on the aggregated storage information and parsing of the media stream, and generates a data stream containing segmenting information.

In S203, the transcoding device outputs the media stream containing aggregated storage information and the data stream containing segmenting information in form of a multicast stream.

In an embodiment of the present invention, the live broadcast media stream is transmitted by the encoder, and the live media stream may be a unicast stream or a multicast stream. TS over RTP or TS over UDP may be used for live broadcast services.

Specifically, parsing the live media stream and adding aggregated storage information into the live media stream by the transcoding device in S201 includes, parsing the media stream, extracting, a start position and an end position of a key frame, and data packet time, or the like, repackaging the media stream, and adding aggregated storage information into an RTP extension header of the media stream.

It should be understood that the live broadcast media stream transmitted by the encoder may be a TS over UDP or a TS over RTP. The live broadcast media stream, after being processed by the transcoding device, is converted into a TS media stream over RTP.

A media stream may be segmented in various manners for various services in S202. For example, a recording for a live broadcast may be segmented into short segments each having a duration of 2 seconds, and a recording for a time-shift playback or replay service may be segmented into short segments each having a duration of 10 seconds. A plurality of data streams each containing a particular segmenting information may be presented, for example, there can be two data streams of segmenting information, one for a live broadcast service and the other for a time-shift playback or replay service.

It should be noted that, no segmenting is performed to the media stream, and no segment is actually generated during the preprocessing of the media stream, but only the media stream is parsed and scanned to determine a particular segment in which a data packet should be contained, and a data stream of segmenting information is generated thereby.

The media stream and segmenting information may be transmitted via the same transmission channel, or may be transmitted via independent data transmission channels respectively, during output of the media stream containing aggregated storage information and the data stream containing segmenting information by the transcoding device in form of a multicast stream in S203. Generally, the media stream and segmenting information are transmitted via independent data transmission channels respectively, such that live broadcast recording and service of IPTV are less susceptible to interference. Specifically, the media stream containing aggregated storage information is transmitted via a first data transmission channel, and the data stream containing the segmenting information is transmitted via a second data transmission channel.

In case that a plurality of data streams of segment information is presented, the plurality of data streams may be multiplexed and transmitted via a single data transmission channel. Alternatively, each data stream may be transmitted via a respective one of a plurality of transmission channels. Users can make flexible choices between these as needed. Specifically, the plurality of data streams may be multiplexed and transmitted via one second data transmission channel. Alternatively, each data stream may be transmitted via a respective one of a plurality of second data transmission channels having the same number of channels as the number of segmenting information data streams, that is, one channel of data stream of segmenting information is transmitted via one independent second data transmission channel. Alternatively, in case that, the number of second data transmission channels is less than the number of data streams of segmenting information, selection and allocation of channels can be performed as needed.

In an embodiment of the present invention, the multicast stream output by the transcoding device is distributed through a transmission network supporting multicast.

In S102, the recording device acquires the aggregated storage information and segmenting information.

In S103, the recording device possesses the media stream based on the aggregated storage information to generate an aggregated segment, and generates corresponding segment index information based on the segmenting information.

In an embodiment of the present invention, the aggregated storage information and segmenting information is acquired by the recording device, specifically, the aggregated storage information is acquired from an RTP extension header of the media stream, a TS stream of video is extracted based on the aggregated storage information, and an aggregated segment is generated, this ensures that the generated aggregated segments are completely consistent during a multi-peer recording. Meanwhile, the HLS segment index information is generated based on the HLS segmenting information, and this ensures that the HLS segments thus generated are also completely consistent during a multi-peer recording. The generated aggregated segment and HLS segment index information is stored. Specifically, data packets with the same aggregated segment identifier are to be stored in the same aggregated segment at a given offset. The HLS segment index information may be stored as a file, stored in a database, or may be stored in a data structure in a memory.

It should be noted that, Forward Error Correction (FEC) or Automatic Repeat-reQuest (ARQ) may be applied to data streams of HLS segmenting information, in order to avoid the failure of a generation of segment index information on the recording device resulting from loss of packets in a data stream of segmenting information, thus improving transmission reliability.

In some application scenarios according to an embodiment of the present invention, upon a request for a time-shifting playback or replay service initiated by a terminal device is received, the recording device receives a back-to-source request for an index file for a time-shifting playback or replay service from an edge node, acquires segment index information, constructs and transmits an HLS index file to the terminal device. The recording device, after receiving a back-to-source request for a segment for the time-shifting playback or replay service from an edge node, acquires aggregated segment data corresponding to the segment, and transmits corresponding data in an aggregated segment to the terminal device. The terminal device, based on the received HLS index file, downloads and plays the segment data to present the desired time-shifting playback or replay service.

It should be understood that the terminal device includes, but is not limited to, a television, a computer, a set-top box, a PAD, a smart phone, or the like.

It should be noted that contents recorded by the recording device can be provided as video services to both IPTV users and OTT users, that is, IPTV and HLS share the same recorded contents, thus saving storage space.

In other application scenarios according to an embodiment of the present invention, a live broadcast may be performed in various manners for various types of a terminal device, when a live broadcast request initiated by the terminal device is received. For a live broadcast presented to an IPTV user, a terminal device of the user joins a multicast group, receives a multicast stream from a transcoding device, decodes the multicast stream, and presents the live broadcast. For a live broadcast presented to an OTT user, a live broadcast center receives a back-to-source request for a live broadcast from an edge node, acquires segment index information, constructs and transmits a live broadcast index file to a terminal device. After receiving a back-to-source request for a live broadcast segment transmitted by the edge node, the live broadcast center acquires aggregated segment data corresponding to a segment and transmits the corresponding data in an aggregated segment to the terminal device. The terminal device downloads and plays live broadcast segment data based on a received HLS live broadcast index file and the desired live broadcast service is presented.

It should be understood that segmenting information is not necessary to an IPTV live broadcast, but is necessary to an HLS live broadcast provided to OTT users.

In the method for recording a live media stream according to an embodiment of the present invention, a multicast stream transmitted by a transcoding device is received by a recording device, and the multicast stream is a media stream containing aggregated storage information and a data stream containing segmenting information. The recording device acquires the aggregated storage information and the segmenting information, processes the media stream based on the aggregated storage information to generate an aggregated segment, and generates corresponding segment index information based on the segmenting information. Thereby for the case where a multi-peer recording and service is provided, the recorded contents between various recording devices are maintained consistent, thus improving users' watching experience. And recorded contents are shared by IPTV and HLS to avoid waste of storage.

### EMBODIMENT TWO

It can be seen from the above embodiment that, a recording device receives a media stream, then receives the corresponding aggregated storage information and the HLS segmenting information and stores the media stream based on the instructions therein, and generates the corresponding HLS segment index information. Thereby, the media stream can be used for an HLS live broadcast and an HLS time shifting playback or replay service, and meanwhile the media streams stored through aggregated storage can also be used for an IPTV time shifting playback or replay service.

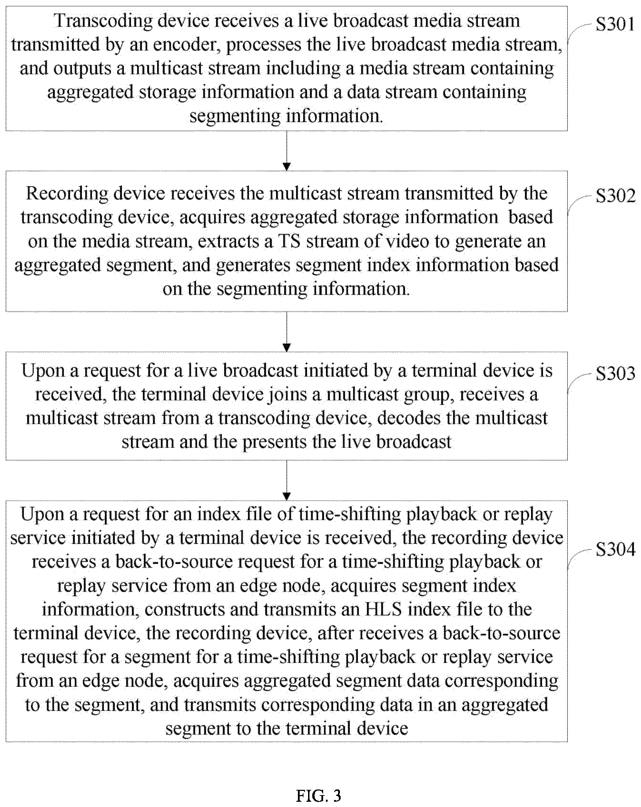

This embodiment of the present invention provides a method for recording live media streams, in which a live broadcast service for channels is provided through IPTV multicast and a time shifting playback or replay service is provided through HLS unicast. Please refer to FIG. 3, which depicts a flow chart of a method for recording a live media stream according to an embodiment of the present invention, which will be described in detail below.

In S301, a transcoding device receives a live broadcast media stream transmitted by an encoder, processes the live broadcast media stream, and outputs a multicast stream including a media stream containing aggregated storage information and a data stream containing segmenting information.

It should be understood that the live broadcast media stream transmitted by the encoder may be a TS over UDP or a TS over RTP. The live media stream, after being processed by the transcoding device, is converted into a TS media stream over RTP. In an embodiment of the present invention, the live media stream transmitted by the encoder is a stream of TS over UDP.

In an embodiment of the present invention, the transcoding device processes the live broadcast media stream. Specifically, the transcoding device parses the media stream, extracts a start and an end positions of a key frame, and data packet time, or the like, repackages the media stream, and adds aggregated storage information into an RTP extension header of the media stream. Then, the transcoding device performs a preprocessing for segmenting on the media stream based on the aggregated storage information and parsing of the media stream, and generates a data stream containing segmenting information.

In an embodiment of the present invention, the media stream of TS over RTP and the data stream containing HLS segmenting information as output by the transcoding device may be transmitted via two independent transmission channels, respectively.

In S302, the recording device receives the multicast stream transmitted by the transcoding device, acquires aggregated storage information based on the media stream, extracts a TS stream of video to generate an aggregated segment, and generates segment index information based on the segmenting information.

Specifically, the aggregated storage information is acquired from an RTP extension header of the media stream, the TS stream of video is extracted based on the aggregated storage information, and an aggregated segment is thus generated, this ensures that the generated aggregated segments are completely consistent during a multi-peer recording. Meanwhile, the HLS segment index information is generated based on the HLS segmenting information, and this ensures that the HLS segments thus generated are also completely consistent during a multi-peer recording. The generated aggregated segment and HLS segment index information is stored. Specifically, data packets with the same aggregated segment identifier are to be stored in the same aggregated segment at a given offset. The HLS segment index information may be stored as a file, stored in a database, or may be stored in a data structure in a memory.

In S303, upon a request for a live broadcast initiated by a terminal device is received, the terminal device joins a multicast group, receives a multicast stream from a transcoding device, decodes the multicast stream and presents the live broadcast.

It should be understood that the terminal device includes, but is not limited to, a television, a computer, a set-top box, a PAD, a smart phone, or the like. In an embodiment of the present invention, the terminal device is described as a smart set-top box in detail by way of example below.

In an embodiment of the present invention, the channel live broadcast service is provided via IPTV multicast. Specifically, the smart set-top box joins a multicast group, receives and decodes a multicast stream of TS over RTP as output by the transcoding device, and presents the channels via live broadcast.

In S304, upon a request for an index file of time-shifting playback or replay service initiated by a terminal device is received, the recording device receives a back-to-source request for a time-shifting playback or replay service from an edge node, acquires segment index information, constructs and transmits an HLS index file to the terminal device. The recording device, after receiving a back-to-source request for a segment for a time-shifting playback or replay service from an edge node, acquires aggregated segment data corresponding to the segment, and transmits corresponding data in an aggregated segment to the terminal device.

In an embodiment of the present invention, a time shifting playback or replay service is provided through HLS unicast, and a service request initiated by a smart set-top box is transmitted to an edge node. The edge node returns to a recording device for corresponding HLS contents. The recording device receives a back-to-source request for an index file of a time-shifting playback or replay service from the edge node, acquires segment index information, constructs and transmits an HLS index file to the terminal device. Upon receiving a back-to-source request for a segment of the time-shifting playback or replay service from the edge node, the recording device acquires the aggregated segment data corresponding to the segment, and transmits the corresponding data in the aggregated segment to the terminal device. The terminal device, based on the received HLS index file, downloads and plays the segment data to present the desired time-shifting playback or replay service.

Specifically, after receiving a back-to-source request for an m3u8 file initiated by the edge node, the recording center reads the HLS segment index information as generated by the recording center, constructs and returns an m3u8 file containing a URI of an HLS segment which explicitly or implicitly points to a range of bytes corresponding to an aggregated segment. After receiving a back-to-source request for an HLS segment from the edge node, the recording center reads and returns the data of the specified range of bytes in a specified aggregated segment based on the information in the URI of the segment.

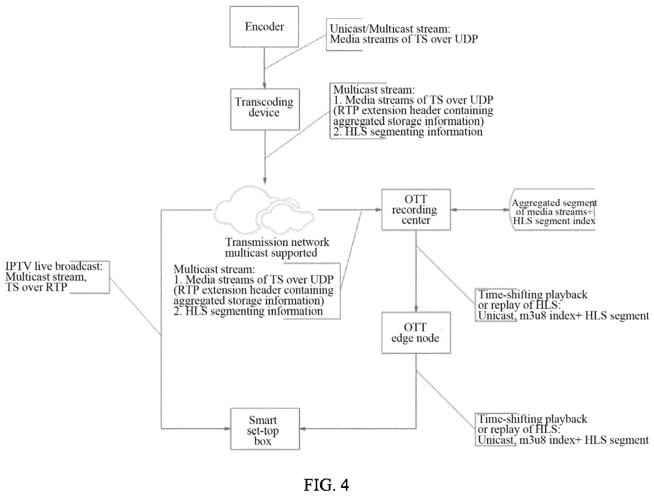

In particular, please turn to FIG. 4, which depicts a schematic diagram of an application scenario according to an embodiment of the present invention, in which an IPTV live broadcast service is provided together with an HLS time shifting playback or replay service.

In the method for recording a live broadcast media stream according to an embodiment of the present invention, a transcoding device receives a live broadcast media stream transmitted by an encoder, processes the live broadcast media stream, and outputs a multicast stream including a media stream containing aggregated storage information and a data stream containing segment information. A recording device receives the multicast stream transmitted by the transcoding device, acquires aggregated storage information based on the media stream, extracts a TS stream of video generates an aggregated segment, and generates segment index information based on the segmenting information. Thereby for the case where a multi-peer recording and service is provided, the recording contents between various recording devices are maintained consistent. And users are allowed to have consist contents as required by the back-to-source request of the service, thus ensuring continuity of the contents, and improving users' watching experience.

### EMBODIMENT THREE

This embodiment of the present invention provides a method for recording a live broadcast media stream, for providing a live broadcast service and a time-shifting playback or replay service via HLS to an OTT user.

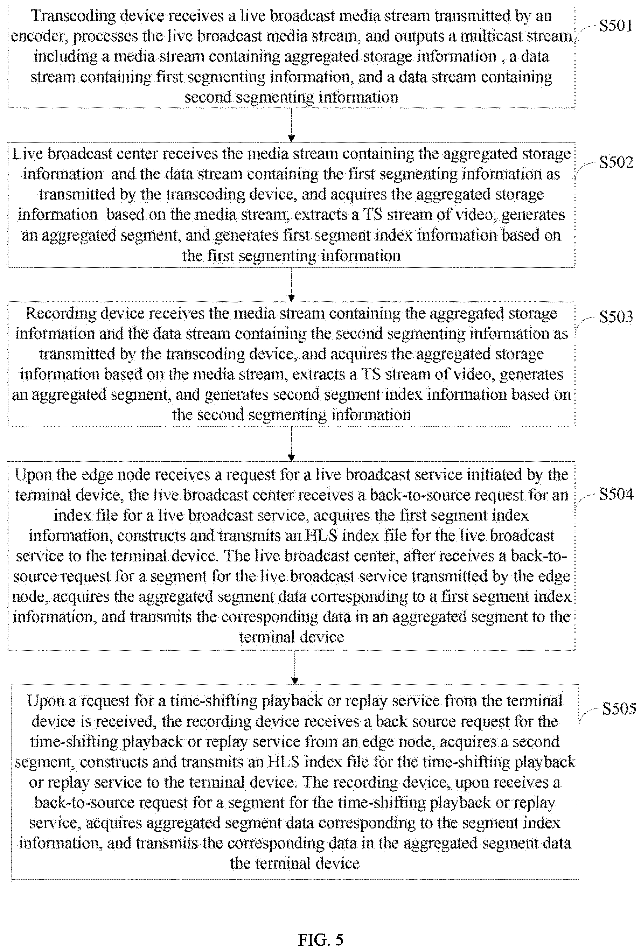

Please refer to FIG. 5, which depicts a schematic flowchart of a method for recording a live broadcast media stream according to an embodiment of the present invention, which will be described in detail as follows.

In S501, a transcoding device receives a live broadcast media stream transmitted by an encoder, processes the live broadcast media stream, and outputs a multicast stream including a media stream containing aggregated storage information, a data stream containing first segmenting information, and a data stream containing second segmenting information.

It should be understood that the live broadcast media stream transmitted by the encoder may be a stream of TS over UDP or a TS over RTP. The live media stream, after being processed by the transcoding device, is converted into a TS media stream over RTP. In an embodiment of the present invention, the live media stream transmitted by the encoder is a stream of TS over UDP.

In an embodiment of the present invention, the transcoding device processes the live media stream. Specifically, the transcoding device parses the media stream, extracts a start and an end positions of a key frame, and data packet time, or the like, repackages the media stream, and adds aggregated storage information into an RTP extension header of the media stream. Then, the transcoding device performs a preprocessing for segmenting on the media stream based on the aggregated storage information and parsing of the media stream, and generates a data stream containing segmenting information.

It should be understood that, the segmenting information is necessary for both a live broadcast service and a time-shifting playback or replay service provided to an OTT user.

A media stream may be segmented in various manners for various services. For example, a recording for a live broadcast may be segmented into short segments each having a duration of 2 seconds, and a recording for a time-shift playback or replay service may be segmented into short segments each having a duration of 10 seconds. A plurality of data streams each containing a particular segmenting information may be presented, for example, there can be two data streams of segmenting information, one for a live broadcast service and the other for a time-shift playback or replay service.

In an embodiment of the present invention, specifically, the multicast stream including the media stream of TS over RTP and the data stream containing HLS segmenting information as output by the transcoding device, may be transmitted via independent transmission channels, respectively. For example, there can be two data streams of HLS segmenting information, one is a data stream containing the first segmenting information, such as a data stream containing segmenting information of HLS segments with a 4-second duration for supporting a live broadcast service, and the other one is a data stream containing second segmenting information, such as a data stream containing segmenting information of HLS segments with a 10-second duration for supporting a time-shifting playback or replay service.

In S502, a live broadcast center receives the media stream containing the aggregated storage information and the data stream containing the first segmenting information as transmitted by the transcoding device, and acquires the aggregated storage information based on the media stream, extracts a TS stream of video, generates an aggregated segment, and generates first segment index information based on the first segmenting information.

Specifically, the live broadcast center for OTT extracts the TS stream of video based on the aggregated storage information given in an RTP extension header of the media stream, generates an aggregated segment, and generates segment index information for a segment of a 4-second duration based on HLS segmenting information for an HLS segment of a 4-second duration. This ensures that the generated aggregated segments are completely consistent and the index information of the segments are also completely consistent during a multi-peer recording.

In S503, a recording device receives the media stream containing the aggregated storage information and the data stream containing the second segmenting information as transmitted by the transcoding device, and acquires the aggregated storage information based on the media stream, extracts a TS stream of video, generates an aggregated segment, and generates second segment index information based on the second segmenting information.

Specifically, the aggregated storage information is acquired from an RTP extension header of the media stream, and the TS stream of video is extracted based on the aggregated storage information to generate an aggregated segment, this ensures that the generated contents are completely consistent during a multi-peer recording. And segment index information for a segment of a 10-second duration based on HLS segmenting information for an HLS segment of a 10-second duration, this ensures that the generated index information of the segments is completely consistent during a multi-peer recording. The generated aggregated segments and HLS segment index information are stored. Specifically, data packets with the same aggregated segment identifier are to be stored in the same aggregated segment at a given offset. The HLS segment index information may be stored as a file, stored in a database, or may be stored in a data structure in a memory.

In S504, upon the edge node receives a request for a live broadcast service initiated by the terminal device, the live broadcast center receives a back-to-source request for an index file for a live broadcast service, acquires the first segment index information, constructs and transmits an HLS index file for the live broadcast service to the terminal device. The live broadcast center, after receiving a back-to-source request for a segment for the live broadcast service transmitted by the edge node, acquires the aggregated segment data corresponding to a first segment, and transmits the corresponding data in an aggregated segment to the terminal device.

In an embodiment of the present invention, the terminal device includes, but is not limited to, a television, a computer, a set-top box, a PAD, a smart phone, or the like. The terminal device in this embodiment of the present invention will be described as an OTT set-top box in detail by way of example below.

Specifically, the edge node, upon receiving an HLS live broadcast service request transmitted by the OTT set-top box, returns to source to the OTT live broadcast center to acquire the contents. The OTT live broadcast center, upon receiving a back-to-source request for an m3u8 file from an edge node, reads segment index information for a segment of a 4-second duration, generates and returns an m3u8 file to the OTT set-top box. The OTT live broadcast center, upon receiving a back-to-source request for an HLS segment of a 4-second duration from the edge node, reads and returns the data of the specified range of bytes in a specified aggregated segment by the URI of the segment, to the OTT set-top box. The OTT set-top box, based on the received HLS index file for the live broadcast service, downloads and plays the segment data to present the desired live broadcast service.

In S505, upon a request for a time-shifting playback or replay service from the terminal device is received, the recording device receives a back source request for the time-shifting playback or replay service from an edge node, acquires a second segment, constructs and transmits an HLS index file for the time-shifting playback or replay service to the terminal device. The recording device, upon receiving a back-to-source request for a segment for the time-shifting playback or replay service, acquires aggregated segment data corresponding to the segment, and transmits the corresponding data in the aggregated segment data to the terminal device.

In an embodiment of the present invention, a time shifting playback or replay service is provided through HLS unicast, and a service request initiated by a smart set-top box is transmitted to an edge node. The edge node returns to a recording device for corresponding HLS contents. The recording device receives a back-to-source request for a time-shifting playback or replay service from the edge node, acquires segment index information, constructs and transmits an HLS index file for the time-shifting playback or replay service to the terminal device. Upon receiving a back-to-source request for a segment of the time-shifting playback or replay service from the edge node, the recording device acquires the aggregated segment data corresponding to the segment, and transmits the corresponding data in the aggregated segment to the terminal device. The terminal device, based on the received HLS index file for the time-shifting playback or replay service, downloads and plays the segment data to present the desired time-shifting playback or replay service.

Specifically, after receiving a back-to-source request for an m3u8 file initiated by the edge node, the recording center reads the HLS segment index information as generated by the recording center, constructs and returns to the OTT set-top box, an m3u8 file containing a URI of an HLS segment which explicitly or implicitly points to a range of bytes corresponding to an aggregated segment. After receiving a back-to-source request for an HLS segment from the edge node, the recording center reads and returns to the OTT set-top box, the data of the specified range of bytes in a specified aggregated segment. The OTT set-top box, based on the received HLS index file for the time-shifting playback or replay service, downloads and plays the segment data to present the desired time-shifting playback or replay service.

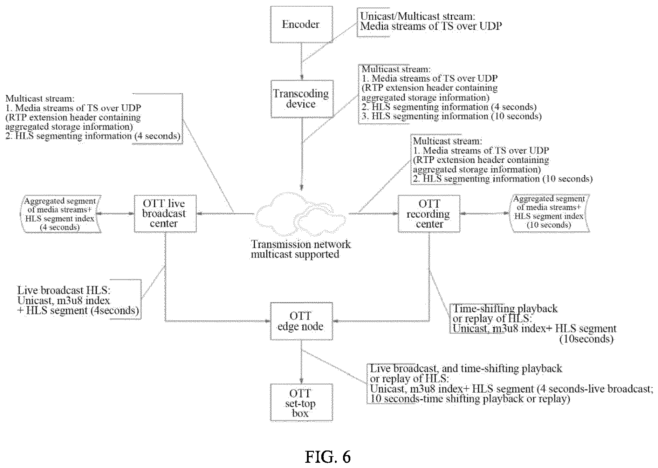

In particular, please turn to FIG. 6, which depicts a schematic diagram of an application scenario for providing a live broadcast service and time-shifting playback or replay service via HLS to an OTT user according to an embodiment of the present invention.

In the method for recording a live broadcast media stream according to this embodiment of the present invention, a transcoding device receives a live broadcast media stream transmitted by an encoder, processes the live broadcast media stream, and outputs a multicast stream including a media stream containing aggregated storage information, a data stream containing first segmenting information, and a data stream containing second segmenting information. A live broadcast center receives the media stream containing the aggregated storage information and the data stream containing the first segmenting information as transmitted by the transcoding device, and acquires the aggregated storage information based on the media stream, extracts a TS stream of video, generates an aggregated segment, and generates first segment index information based on the first segmenting information. A recording device receives the media stream containing the aggregated storage information and the data stream containing the second segmenting information as transmitted by the transcoding device, and acquires the aggregated storage information based on the media stream, extracts a TS stream of video, generates an aggregated segment, and generates second segment index information based on the second segmenting information. A live broadcast service is provided to a user through the media stream containing the aggregated storage information, and the first segmenting information. And a time-shifting playback or replay service is provided to a user through the media stream containing the aggregated storage information, and the second segmenting information. Thereby for the case where a multi-peer recording and service is provided, the recording contents between various recording devices are maintained consistent. And users are allowed to have consist contents as required by the back-to-source request of the service, thus ensuring continuity of the contents, and improving users' watching experience.

### EMBODIMENT FOUR

This embodiment of the present invention provides a method for recording a live media stream, which supports provision of a live broadcast service, a time-shifting playback or replay service to both an IPTV user and an OTT user by an integrated CDN node.

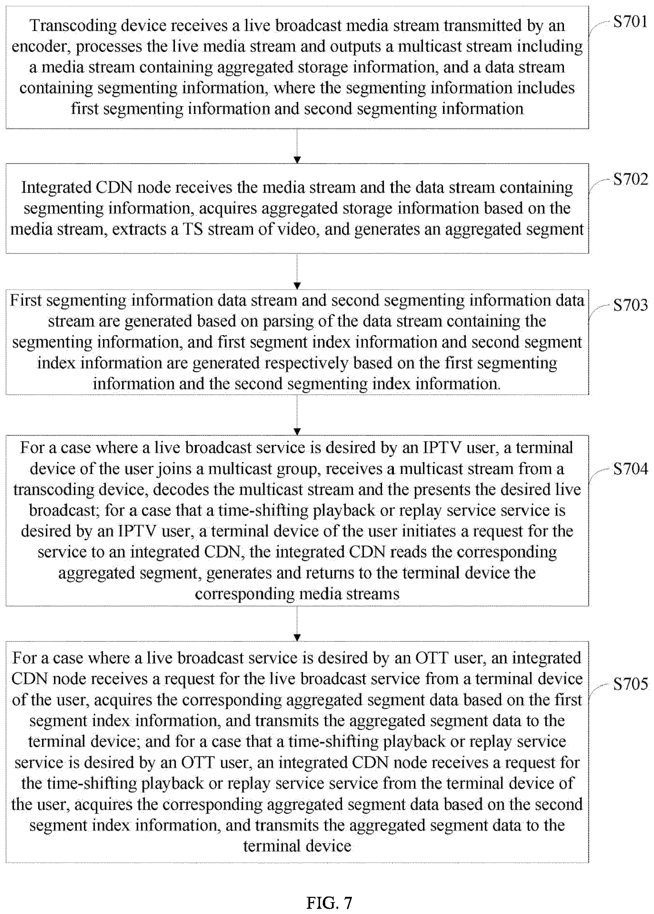

Please refer to FIG. 7, which depicts a schematic flowchart of a method for recording a live broadcast media stream according to an embodiment of the present invention, which will be described in detail is as follows.

In S701, a transcoding device receives a live broadcast media stream transmitted by an encoder, processes the live media stream and outputs a multicast stream including a media stream containing aggregated storage information, and a data stream containing segmenting information, where the segmenting information includes first segmenting information and second segmenting information.

It should be understood that the live broadcast media stream transmitted by the encoder may be a stream of TS over UDP or TS over RTP. The live media stream, after being processed by the transcoding device, is converted into a TS media stream over RTP. In an embodiment of the present invention, the live media stream transmitted by the encoder is a stream of TS over UDP.

In an embodiment of the present invention, the transcoding device processes the live media stream. Specifically, the transcoding device parses the media stream, extracts a start and an end positions of a key frame, and data packet time, or the like, repackages the media stream, and adds aggregated storage information into an RTP extension header of the media stream. Then, the transcoding device performs a preprocessing for segmenting on the media stream based on the aggregated storage information and parsing of the media stream, and generates a data stream containing segmenting information.

It should be understood that, the segmenting information is necessary for both a live broadcast service and a time-shifting playback or replay service provided to an OTT user.

A media stream may be segmented in various manners for various services. For example, a recording for a live broadcast may be segmented into short segments each having a duration of 2 seconds, and a recording for a time-shift playback or replay service may be segmented into short segments each having a duration of 10 seconds. A plurality of data streams each containing a particular segmenting information may be presented, for example, there can be two data streams of segmenting information, one for a live broadcast service and the other for a time-shift playback or replay service.

In an embodiment of the present invention, the transcoding device outputs a multicast stream including a media stream containing aggregated storage information and a data stream containing segmenting information. The media stream and the segmenting information can be transmitted via the same transmission channel or respectively transmitted via independent transmission channels. Generally, the media stream and segmenting information are transmitted via independent transmission channels respectively, such that live broadcast recording and service of IPTV are less susceptible to interference.

In case that, a plurality of data streams of segment information is presented, the plurality of data streams may be multiplexed and transmitted via a single data transmission channel. Alternatively, each data stream may be transmitted via a respective one of a plurality of transmission channels. Users can make flexible choices between these as needed.

Specifically, the multicast stream as output by the transcoding device, includes a media stream of TS over RTP and a data stream containing HLS segmenting information. And, the HLS segmenting information includes first segmenting information and second segmenting information. In an embodiment of the present invention, the media stream is transmitted independently via one transmission channel, and streams of the first and second segmenting information are multiplexed and transmitted via another transmission channel. For example, the first segmenting information is segmenting information of HLS segments with a 4-second duration for supporting a live broadcast service, and the second segmenting information is segmenting information of HLS segments with a 10-second duration for supporting a time-shifting playback or replay service.

In S702, an integrated CDN node receives the media stream and the data stream containing segmenting information, acquires aggregated storage information based on the media stream, extracts a TS stream of video, and generates an aggregated segment.

In S703, first segmenting information data stream and second segmenting information data stream are generated based on parsing of the data stream containing the segmenting information, and first segment index information and second segment index information are generated respectively based on the first segmenting information and the second segmenting index information.

In an embodiment of the present invention, the integrated CDN node acquires the aggregated storage information from an RTP extension header of the media stream, and extracts the TS stream of video based on the aggregated storage information, and generates an aggregated segment, thus ensuring that the generated contents are completely consistent during a multi-peer recording. And first segmenting information data stream and second segmenting information data stream are generated based on parsing of the data stream containing the segmenting information, and first segment index information and second segment index information is generated respectively based on the first segmenting information and the second segmenting information.

In an embodiment of the present invention, the generated aggregated segments and HLS segment index information are stored. Specifically, data packets with the same aggregated segment identifier are to be stored in the same aggregated segment at a given offset. The HLS segment index information may be stored as a file, stored in a database, or may be stored in a data structure in a memory.

In S704, for a case where a live broadcast service is desired by an IPTV user, a terminal device of the user joins a multicast group, receives a multicast stream from a transcoding device, decodes the multicast stream and presents the desired live broadcast; for a case that a time-shifting playback or replay service is desired by an IPTV user, a terminal device of the user initiates a request for the service to an integrated CDN, the integrated CDN reads the corresponding aggregated segment, generates and returns to the terminal device the corresponding media streams.

The terminal device includes, but is not limited to, a television, a computer, a set-top box, a PAD, a smart phone, or the like. This embodiment of the present invention supports provision of a live broadcast service, a time-shifting playback or replay service to both an IPTV user and an OTT user by an integrated CDN node. The terminal device in this embodiment of the present invention will be respectively described as an IPTV set-top box and an OTT set-top box in detail by way of example below.

In an embodiment of the present invention, a channel live broadcast service is provided via an IPTV multicast. Specifically, the smart set-top box joins a multicast group, receives and decodes a multicast stream of TS over RTP as output by the transcoding device, and presents the channels via live broadcast. And a channel time-shifting playback or replay service is provided via an IPTV unicast. Specifically, a terminal device initiates a request for a Real Time Streaming Protocol (RTSP) service to an integrated CDN node. The integrated CDN node reads the corresponding aggregated segment, generates and returns to the terminal device an RTP media stream. The terminal device, based on the received RTP media stream, presents the desired time-shifting playback or replay service of IPTV.

In S705, for a case where a live broadcast service is desired by an OTT user, an integrated CDN node receives a request for the live broadcast service from a terminal device of the user, acquires the corresponding aggregated segment data based on the first segment index information, and transmits the aggregated segment data to the terminal device; and for a case that a time-shifting playback or replay service is desired by an OTT user, an integrated CDN node receives a request for the time-shifting playback or replay service from the terminal device of the user, acquires the corresponding aggregated segment data based on the second segment index information, and transmits the aggregated segment data to the terminal device.

In an embodiment of the present invention, a live broadcast service, and a time-shifting playback or replay service are provided via HLS unicast. Specifically, for a live broadcast service, an integrated CDN node receives a request for a live broadcast service from an OTT set-top box, constructs and returns to the OTT set-top box, an m3u8 file based on first segment index information, and the m3u8 file contains a URI of an HLS segment which points to a corresponding range of bytes of a corresponding aggregated segment. And the integrated CDN node reads and returns to the OTT set-top box, the specified range of bytes of the specified aggregated segment. The OTT set-top box, based on the received first segment index information, plays the aggregated segment data, thus presenting the desired live broadcast service. For a time-shifting playback or replay service, an integrated CDN node receives a request for a time-shifting playback or replay service from an OTT set-top box, constructs and returns to the OTT set-top box, an m3u8 file based on the second segment index information, and the m3u8 file contains a URI of an HLS segment which points to a corresponding range of bytes of a corresponding aggregated segment. And the integrated CDN node reads and returns to the OTT set-top box, the specified range of bytes of the specified aggregated segment. The OTT set-top box, based on the received second segment index information, plays the aggregated segment data, thus presenting the desired time-shifting playback or replay service.

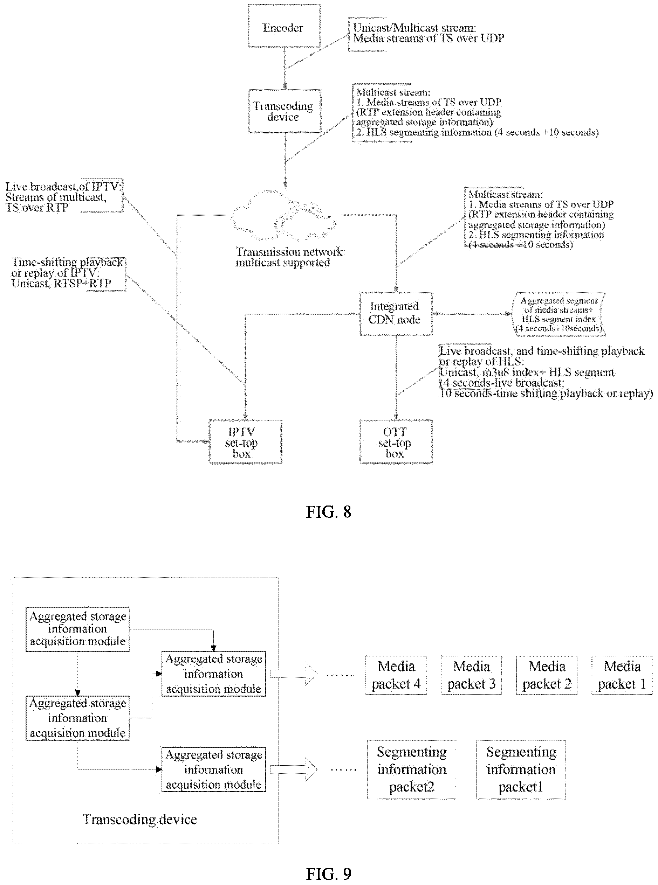

Specifically, please turn to FIG. 8, which depicts a schematic diagram of an application scenario which supports provision of a live broadcast service, a time-shifting playback or replay service to both an IPTV user and an OTT user by an integrated CDN node, according to an embodiment of the present invention.

The method for recording a live broadcast media stream according to this embodiment of the present invention supports provision of a live broadcast service, a time-shifting playback or replay service to both an IPTV user and an OTT user by an integrated CDN node. Thereby for the case where a multi-peer recording and service is provided, the recording contents between various recording devices are maintained consistent. And users are allowed to have consist contents as required by the back-to-source request of the service, thus ensuring continuity of the contents, and improving users' watching experience. Further, the recorded contents are shared, and wasting of storage is avoided.

### EMBODIMENT FIVE

This embodiment of the present invention further provides a system for recording a live broadcast media stream for carrying out the method for recording a live broadcast media stream according to the present application. The system for recording a live broadcast media stream includes a transcoding device and a recording device.

The transcoding device is configured to, parse and process a media stream, add aggregated storage information to the media stream, perform a preprocessing for segmenting on the media stream based on the aggregated storage information and parsing of the media stream, and generate a data stream containing segmenting information.

The recording device is configured to, receive a multicast stream including a media stream containing aggregated storage information and a data stream containing segmenting information transmitted by the transcoding device, acquire the aggregated storage information and the segmenting information, process the media stream based on the aggregated storage information to generate an aggregated segment, and generate a corresponding segment index information based on the segmenting information.

In an embodiment of the present invention, the recording device is a device configured for aggregated segmenting and segment indexing for recorded media streams. The recording device may be an individual recording center, or may be arranged in a CDN and co-located with a service node. The segmenting information is HLS segmenting information, which is indicative of a method for segmenting based on the HLS protocol.

In an embodiment of the present invention, the transcoding device includes a media data receiving module, a media data parsing module, an aggregated storage information generating module, and segmenting information generating module. FIG. 9 depicts a schematic diagram with details for those modules.

The media data receiving module is configured to receive a live broadcast media stream output by an encoder.

The media data parsing module is configured to parse and process the media stream.

The aggregated storage information generating module is configured to repackage the media stream, add the aggregated storage information into the media stream and transmit the media stream.

The segmenting information generating module is configured to perform a preprocessing for segmenting on the media stream based on the aggregated storage information and parsing of the media stream, generate a data packet containing segmenting information, and transmit the data packet.

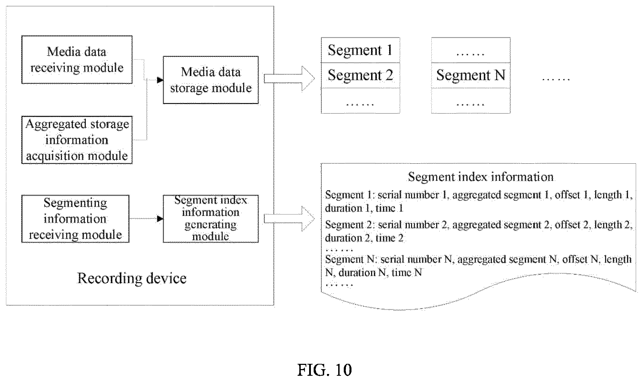

The recording device includes a media data receiving module, an aggregated storage information acquisition module, a media data storage module, segmenting information receiving module, and a segment index information generating module. FIG. 10 depicts a schematic diagram with details for those modules.

The media data receiving module is configured to receive a media stream containing aggregated storage information.

The aggregated storage information acquisition module is configured to acquire the aggregated storage information.

The media data storage module is configured to process the media stream based on the aggregated storage information to generate an aggregated segment.

The segmenting information receiving module is configured to receive a data stream containing segmenting information.

The segment index information generating module is configured to generate corresponding segment index information based on the segmenting information.

It should be understood that the information for aggregated storage is used to instruct the recording device how to the media streams should be stored, and usually includes the following information, an aggregated segment identifier, an offset position of the first byte of media data contained in a data packet in the aggregated segment, and may further include, a system time corresponding to the data packet, a data packet identifier, and other information required for recording for an IPTV channel. The HLS segmenting information includes but is not limited to, an identifier of the aggregated segment to which a segment belongs, a sequence number of the segment, and an offset position of the first byte of the segment in an aggregated segment, a length of the segment, duration of the segment, a system time corresponding to the first frame of the segment, an identifier of the segment, or the like. An embodiment further provides a computer-readable storage medium, which includes volatile or nonvolatile, removable or non-removable media implemented in any method or technology for storing information such as computer-readable instructions, data structures, computer program modules or other data. Computer-readable storage media include, but are not limited to, RAM(Random Access Memory), ROM(Read-Only Memory), EEPROM (electrically erasable programmable read-only memory), Erasable programmable read-only memory), flash memory or other memory technologies, CD-ROM (compact disc read-only memory), digital versatile disc (DVD) or other optical disc storage, magnetic box, magnetic tape, magnetic disc storage or other magnetic storage devices, or any other medium that can be used to store desired information and can be accessed by a computer.

The computer-readable storage medium according to this embodiment may be configured to store at least one computer program executable by a processor, which when executed by the processor, causes the processor to carry out at least one step of the method for recording a live broadcast media stream in the above-mentioned embodiments.

In the method and system for recording a live broadcast media stream, and computer-readable storage medium according to some embodiments of the present invention, a multicast stream transmitted by a transcoding device is received by a recording device, and the multicast stream is a media stream containing aggregated storage information and a data stream containing segmenting information. The recording device acquires the aggregated storage information and the segmenting information, processes the media stream based on the aggregated storage information to generate an aggregated segment, and generates corresponding segment index information based on the segmenting information. Thereby for some implementations where a multi-peer recording and service is provided, the recorded contents between various recording devices are maintained consistent, thus improving users' watching experience. And recorded contents are shared by IPTV and HLS to avoid waste of storage.

It shall be appreciated by a person having ordinary skills in the art that all or some of the steps, systems and functional modules/units in the methods disclosed above can be implemented as software (which can be implemented by computer program codes executable by computing devices), firmware, hardware and appropriate combinations thereof. In the hardware implementation, the division between functional modules/units mentioned in the above description does not necessarily correspond to the division of physical components. For example, a physical component can have multiple functions, or a function or step can be performed by several physical components in cooperation. Some or all physical components can be implemented as software executable by a processor, such as a central processing unit, a digital signal processor or a microprocessor, or as hardware, or as an integrated circuit, such as an application specific integrated circuit.

Furthermore, it is well known to a person having ordinary skills in the art that communication media usually contain computer-readable instructions, data structures, computer program modules or other data in modulated data signals such as carrier waves or other transmission mechanisms, and can include any information delivery media. Therefore, the present invention is not limited to any specific combination of hardware and software.

The above content is a further detailed description of the embodiments of the present invention in conjunction with detailed embodiments, and it is not intended to limit the present invention to these descriptions. For a person having ordinary skill in the art, various deductions or alterations can be made without departing from the concept of the present invention, and these should be regarded as falling within the protection scope of the present invention.

## Claims

1. A method for recording a live broadcast media stream, comprising,
receiving, by a recording device, a multicast stream comprising a media stream containing aggregated storage information and a data stream containing segmenting information as transmitted by a transcoding device;
acquiring, by the recording device, the aggregated storage information and the segmenting information; and
processing the media stream based on the aggregated storage information and generating an aggregated segment, and generating corresponding segment index information based on the segmenting information, by the recording device.

2. The method of claim 1, wherein prior to receiving, by a recording device, a multicast stream comprising a media stream containing aggregated storage information and a data stream containing segmenting information as transmitted by a transcoding device, the method further comprises,
receiving, a live broadcast stream transmitted by an encoder, parsing the live broadcast stream and adding the aggregated storage information into the live broadcast stream, by the transcoding device;
performing a preprocessing for segmenting on the live broadcast stream based on the aggregated storage information and parsing of the live broadcast stream, and generating a data stream containing segmenting information, by the transcoding device; and
outputting a media stream containing aggregated storage information and a data stream containing segmenting information in form of a multicast stream, by the transcoding device.

3. The method of claim 2, wherein outputting a media stream containing aggregated storage information and a data stream containing segmenting information in form of a multicast stream by the transcoding device, comprises,
outputting the media stream containing aggregated storage information via a first data transmission channel, and outputting the data stream containing the segmenting information via a second data transmission channel respectively, in form of a multicast stream, by the transcoding device.

4. The method of claim 3, wherein the data stream containing segmenting information comprises at least one data stream containing segmenting information;
in response to a determination that the data stream containing segmenting information comprises at least two data streams containing segmenting information, outputting the data stream containing the segmenting information via a second data transmission channel comprises,
multiplexing and outputting the at least two data streams containing segmenting information via a second data transmission channel,
or,
outputting each of the at least two data streams containing segmenting information via a respective one of a plurality of second data transmission channels having a number of channels being equal to a number of data streams of the at least two data streams containing segmenting information.

5. The method of any one of claims 1-4, further comprising,
in response to a request for a time-shifting playback or replay service, receiving a back-to-source request for an index file for the time-shifting playback or replay service from an edge node, acquiring the segment index information, constructing and transmitting an HLS index file for the time-shifting playback or replay service to a terminal device, by the recording device, the back-to-source request for an index file for the time-shifting playback or replay service being a request transmitted to the recording device from the edge node in response to the request for the time-shifting playback or replay service initiated by the terminal device; and
subsequent to receiving a back-to-source request for a segment for the time-shifting playback or replay service from the edge node, acquiring corresponding data in an aggregated segment corresponding to the segment based on a URI of the segment, and transmitted the corresponding data in the aggregated segment to the terminal device, by the recording device.

6. The method of any one of claims 1-4, further comprising,
in response to a request for a live broadcast service of HLS, receiving a back-to-source request for an index file for the live broadcast service, acquiring the segment index information, constructing and transmitting an HLS index file for the live broadcast service to a terminal device, by a live broadcast center, the back-to-source request being a request transmitted to the recording device from an edge node in response to the request for the live broadcast service of HLS initiated by the terminal device; and
subsequent to receiving a back-to-source request for a segment for the live broadcast service transmitted by an edge node, acquiring corresponding data in an aggregated segment corresponding to the segment index information, and transmitting the corresponding data in the aggregated segment to the terminal device, by the live broadcast center.

7. A system for recording a live broadcast media stream, comprising a transcoding device and a recording device, wherein,
the transcoding device is configured to, parse a media stream and add aggregated storage information into the media stream, segment the media stream based on the aggregated storage information and parsing of the media stream, and generate a data stream containing segmenting information; and
the recording device is configured to, receive a multicast stream comprising a media stream containing aggregated storage information and a data stream containing segmenting information as transmitted by a transcoding device, acquire the aggregated storage information and the segmenting information, process the media stream based on the aggregated storage information to generate an aggregated segment, and generate corresponding segment index information based on the segmenting information.

8. The system of claim 7, wherein the transcoding device comprises a media data receiving module, a media data parsing module, an aggregated storage information generating module, and a segmenting information generating module; and wherein
the media data receiving module is configured to receive a live broadcast media stream output by an encoder;
the media data parsing module is configured to parse and process the live broadcast media stream; the aggregated storage information generating module is configured to repackage the live broadcast media stream, add the aggregated storage information into the live broadcast media stream and transmit the live broadcast media stream; and
the segmenting information generating module is configured to perform a preprocessing for segmenting on the live broadcast media stream based on the aggregated storage information and parsing of the live broadcast media stream, and generate and transmit a data packet containing segmenting information.

9. The system of claim 7, wherein the recording device includes a media data receiving module, an aggregated storage information acquisition module, a media data storage module, segmenting information receiving module, and a segment index information generating module; and wherein
the media data receiving module is configured to receive a media stream containing aggregated storage information;
the aggregated storage information acquisition module is configured to acquire the aggregated storage information;
the media data storage module is configured to process the media stream based on the aggregated storage information and generate an aggregated segment;
the segmenting information receiving module is configured to receive a data stream containing segmenting information; and
the segment index information generating module is configured to generate corresponding segment index information based on the segmenting information.

10. A computer-readable storage medium storing at least one computer program executable by a processor, which when executed by the processor, causes the processor to carry out the method for recording a live broadcast media stream of any one of claims 1 to 6.
